# EUROPEAN PATENT APPLICATION

(11) **EP 4 512 647 A1**
(43) Date of publication of application: **26.02.2025**
(21) Application number: 24193371.2
(22) Date of filing: 07.08.2024
(51) Int. Cl.: B60K 1/00

(54) **WORK VEHICLE**

(30) Priority: 17.08.2023 JP 2023132989
(71) Applicant: Kubota Corporation, Osaka-shi, Osaka 556-8601 (JP)
(72) Inventor: OKAZAKI, Kazuto, SAKAI-SHI, OSAKA, 5900908 (JP); MIYAKE, Yuichi, SAKAI-SHI, OSAKA, 5900908 (JP); SATOZONO, Takeshi, SAKAI-SHI, OSAKA, 5900908 (JP)
(74) Representative: Cabinet Beau de Loménie

(57) **Abstract**

A work vehicle according to the present invention includes an electric device (12) and a terminal section (36) on an outer surface of the electric device. The terminal section (36) is inclined on a portion of the outer surface which portion faces upward relative to the body.

## Description

### Technical Field

The present invention relates to a work vehicle.

### Background Art

A work vehicle (utility vehicle) may include an electric device (assist motor) as disclosed in Patent Literature 1.

### Citation List

### Patent Literature

### Patent Literature 1

Japanese Patent No. 7050421

### Summary of Invention

### Technical Problem

The above work vehicle may include an electric device provided with a terminal section on an outer surface thereof. Such a work vehicle involves connecting a harness to the electric device, which has led to a demand for a work vehicle that allows a harness to be easily connected to the electric device.

The present invention provides a work vehicle that allows a harness to be easily connected to an electric device thereof and that prevents the terminals of the electric device from being easily wetted with water and having trouble.

### Solution to Problem

A work vehicle according to the present invention includes: a terminal section; and an electric device having an outer surface on which the terminal section is disposed, the terminal section being inclined on a portion of the outer surface which portion faces upward relative to a body of the work vehicle.

The above configuration allows a person to connect a harness to the terminal section from above the electric device, and thereby facilitates connecting a harness to the electric device. The inclination of the terminal section allows rain water or car washing water thereon to flow off the terminal section and thereby prevents water from remaining on the terminal section. This in turn prevents the terminals of the electric device from being easily wetted with water and having trouble.

The work vehicle may preferably further include: a cargo box movable into a dumping orientation, wherein the electric device is below the cargo box.

With the above configuration, moving the cargo box into a dumping orientation allows a person to perform maintenance work such as checking the terminal section in a large work space above the terminal section. This facilitates maintaining the terminal section.

The work vehicle may preferably be further configured such that the electric device is an electric motor.

The above configuration allows a person to connect a cable to the electric motor, and prevents the terminals of the electric motor from being easily wetted with water and having trouble.

The work vehicle may preferably further include: a travel device; a transmission case configured to receive motive power from the electric motor and output the motive power to the travel device; and an endless rotor wound around an output pulley of the electric motor and an input pulley of the transmission case and configured to transmit motive power from the output pulley to the input pulley, wherein the terminal section is inclined as viewed along a rotation axis of the output pulley.

The above configuration allows the terminal section to be inclined on a portion of the outer surface of the electric motor which portion faces upward relative to the body while preventing the distance between the output and input pulleys and their respective orientations relative to each other from being changed by rotation of the electric motor about the rotation axis of the output pulley. A simple power transmission structure including an endless rotor alone allows motive power to be transmitted from the electric motor to the transmission case and prevents the terminals from being easily wetted with water and having trouble.

The work vehicle may preferably further include: an inverter connected to the electric motor, wherein the inverter has an outer surface provided with an inverter terminal section, and the inverter terminal section is on a portion of the outer surface of the inverter which portion faces downward relative to the body.

The above configuration prevents rain water or car washing water falling from above onto the inverter from easily reaching the inverter terminal section, and thereby prevents the inverter terminal section from being easily wetted with water and having trouble.

The work vehicle may preferably further include: a cooling fan disposed above the inverter and configured to supply cooling air to the inverter.

The above configuration allows the cooling fan to cool the inverter while preventing rain water or the like from easily reaching the inverter terminal section even if the rain water enters the cooling fan and falls onto the inverter below.

### Brief Description of Drawings

Fig. 1 is a left side view of a utility vehicle.
Fig. 2 is a right side view of a utility vehicle.
Fig. 3 is a diagram illustrating components such as a transmission case, an electric motor, an inverter, and a first battery as viewed from above.
Fig. 4 is a diagram illustrating a transmission case, an electric motor, an inverter, and a first battery as viewed from the left side.
Fig. 5 is a diagram illustrating a transmission case and an electric motor as viewed from backward.
Fig. 6 is a diagram illustrating an inverter and an in-vehicle charger device as viewed from backward.

### Description of Embodiments

The description below deals with an example embodiment of the present invention with reference to drawings.

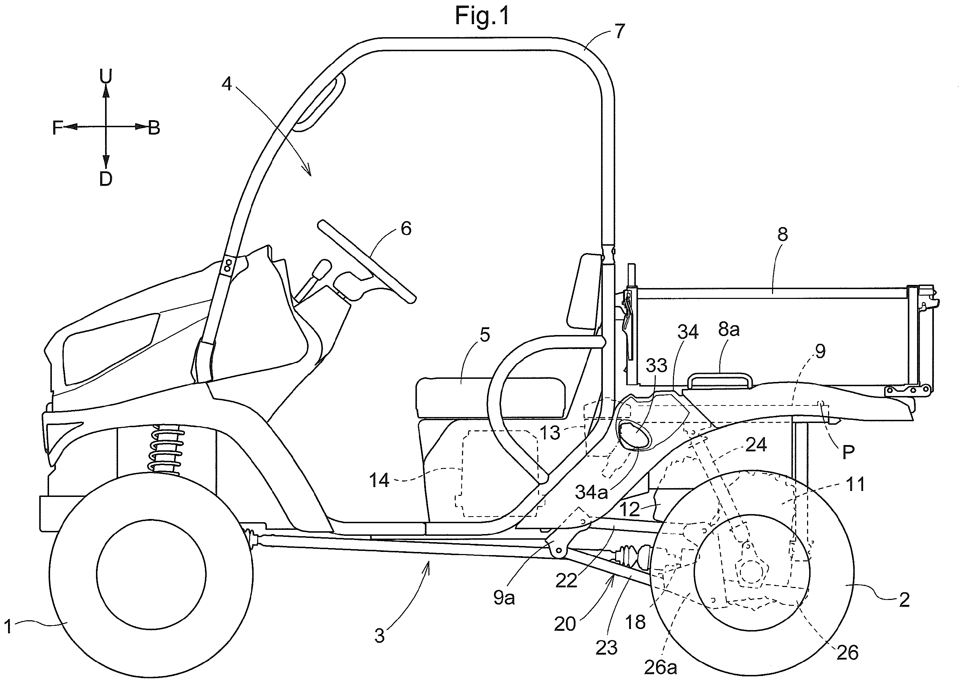

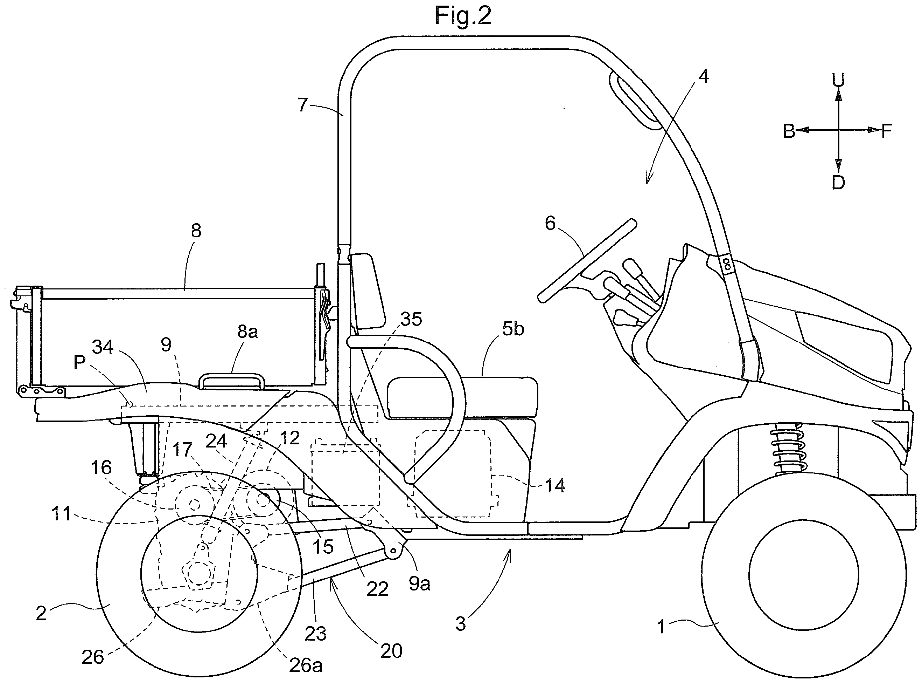

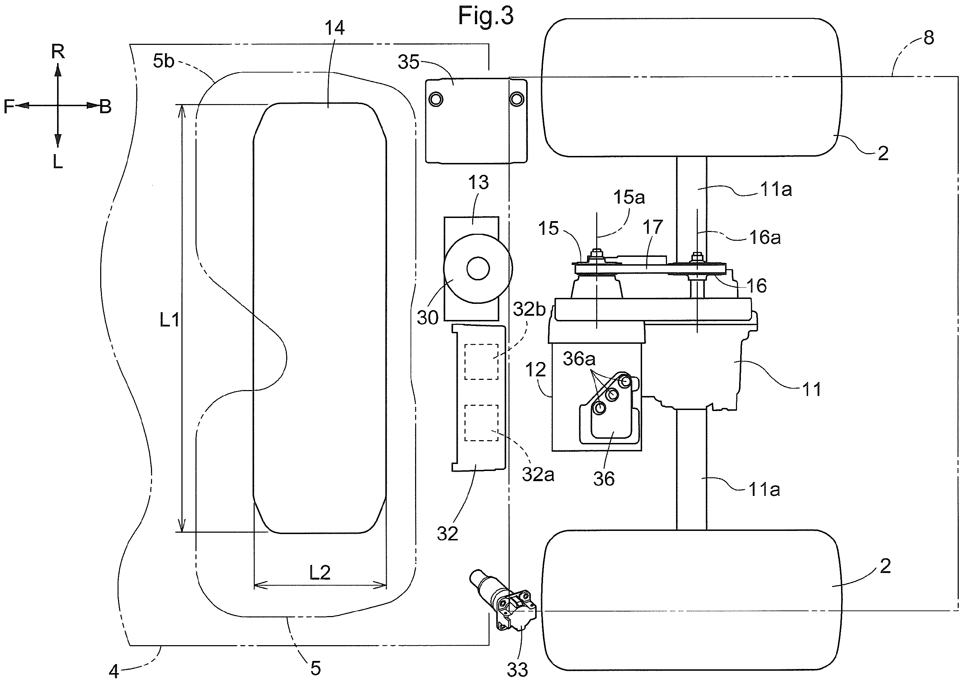

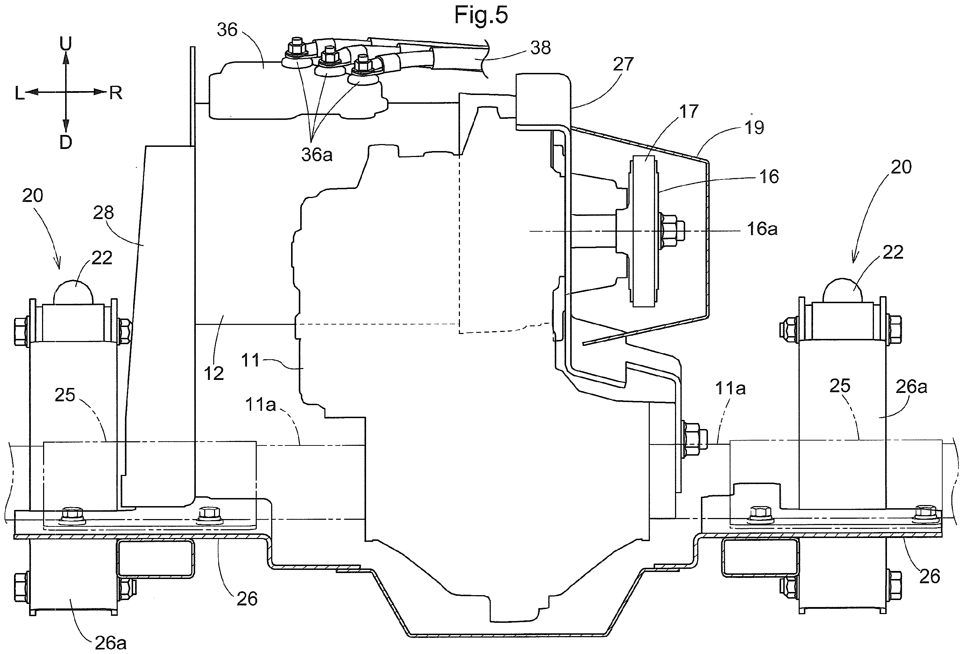

The embodiment described below is a utility vehicle (which is an example of the "work vehicle") including a body. Drawings such as Figs. 1 and 2 show arrow F to indicate the forward side of the body, arrow B to indicate the backward side of the body, arrow U to indicate the upward side of the body, and arrow D to indicate the downward side of the body. Drawings such as Figs. 3 and 5 show arrow L to indicate the left side of the body, which corresponds to the front side of Fig. 1 and the back side of Fig. 2. Drawings such as Figs. 3 and 5 show arrow R to indicate the right side of the body, which corresponds to the back side of Fig. 1 and the front side of Fig. 2. The left-right direction of the body corresponds to the width direction of the body.

### Overall Configuration of Utility Vehicle

Figs. 1 and 2 each illustrate a utility vehicle for multiple purposes such as cargo transport and recreation. The utility vehicle includes a pair of left and right turnable and drivable front wheels 1 as a travel device, a pair of left and right drivable rear wheels 2 as a travel device, and a body 3 provided with the front and rear wheels 1 and 2. The body 3 has a front portion provided with a driver section 4 for a driver to get in. The driver section 4 includes a driver's seat 5, a passenger's seat 5b next to the driver's seat 5, a steering wheel 6 for turning the front wheels 1, and a roll-over protective structure (ROPS) 7 that defines a driver space. The driver's seat 5 and the passenger's seat 5b are between the front wheels 1 and the rear wheels 2 in a plan view. The utility vehicle includes a cargo box 8 backward of the driver section 4 and a body frame 9 holding the cargo box 8 in such a manner that the cargo box 8 is swingable up and down about a coupling axis P for the cargo box 8 and the body frame 9. The cargo box 8 includes at opposite sides thereof two handles 8a usable to swing the cargo box 8 up into a dumping orientation and down into a travel orientation.

### Driving Front and Rear Wheels

As illustrated in Figs. 1 to 3, the body 3 is provided with a transmission case 11, an electric motor 12, an inverter 13, and a first battery 14 to drive the front and rear wheels 1 and 2. The electric motor 12 includes an output pulley 15. The transmission case 11 includes an input pulley 16. The utility vehicle includes an endless rotor 17 wound around the output and input pulleys 15 and 16. The output pulley 15 is at a side portion of the electric motor 12 which side portion is on the right side relative to the body. The output pulley 15 is rotatable about an output axis of the electric motor 12 as a rotation axis 15a which output axis extends in the width direction of the body. The input pulley 16 is backward of the output pulley 15 relative to the body. The input pulley 16 is rotatable about an input axis of the transmission case 11 as a rotation axis 16a, which is parallel to the rotation axis 15a. The utility vehicle includes a cover 19 (not illustrated in Fig. 3) covering the output and input pulleys 15 and 16 and the endless rotor 17. The endless rotor 17 is an endless rotary belt for the present embodiment, but may alternatively be an endless rotary chain.

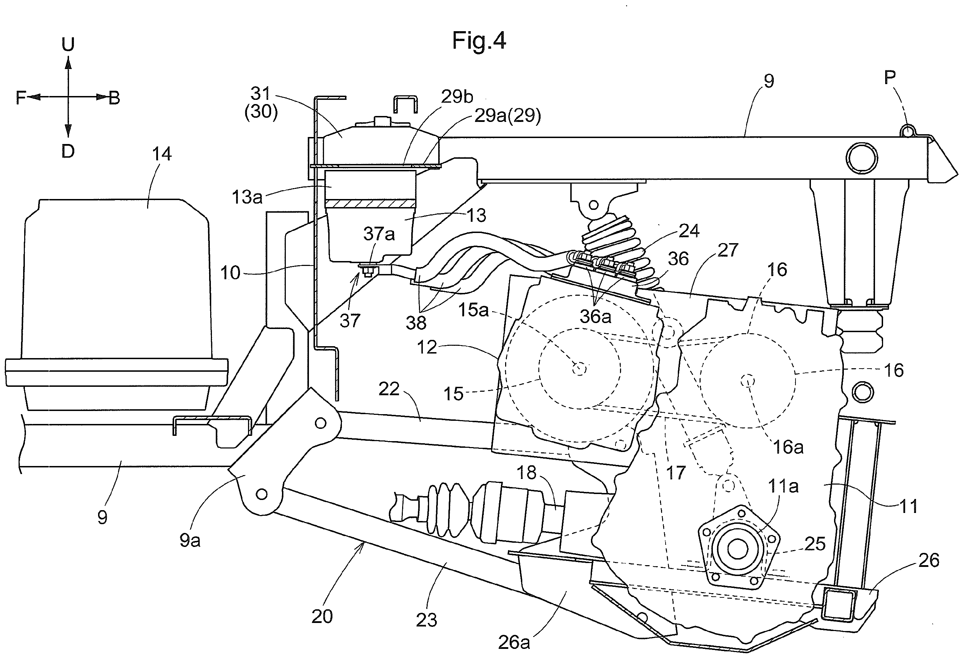

The first battery 14 feeds its direct-current electric power to the inverter 13, which then converts it into alternating-current electric power. The inverter 13 supplies the alternating-current electric power to the electric motor 12 to drive the electric motor 12. The electric motor 12 transmits its motive power from the output pulley 15 through the endless rotor 17 to the input pulley 16 to be inputted into the transmission case 11 and varied by a transmission (not illustrated in the drawings) in the transmission case 11. The transmission outputs the varied motive power from a rear-wheel differential mechanism (not illustrated in the drawings) in the transmission case 11 to the rear wheels 2 and from a front output shaft 18 (see Figs. 1 and 4) at a front portion of the transmission case 11 to the front wheels 1.

The transmission case 11 is, as illustrated in Figs. 1 to 3, below the cargo box 8 and between the rear wheels 2. The utility vehicle includes left and right suspension mechanisms 20 (see Figs. 4 and 5) extending from respective left and right lateral side portions of the transmission case 11 to the body frame 9. The transmission case 11 is held by the body frame 9 with the suspension mechanisms 20 in-between.

As illustrated in Figs. 1, 2, 4, and 5, the suspension mechanisms 20 each include an upper arm 22, a lower arm 23, and a cushion device 24. The upper and lower arms 22 and 23 are below a back portion of the driver section 4, extend backward from a front holder 9a of the body frame 9, and are swingable up and down. The cushion device 24 is below the cargo box 8, has an upper end coupled to the body frame 9, and includes a shock absorber and a coil spring. The utility vehicle includes left and right coupler members 25 and left and right rear-wheel support members 26. The transmission case 11, as illustrated in Fig. 5, includes left and right rear axle cases 11a protruding on respective left and right lateral sides toward the respective rear wheels 2 and coupled to the respective rear-wheel support members 26 with use of the respective coupler members 25 to be held by the respective rear-wheel support members 26. The rear-wheel support members 26 are provided with respective rear holders 26a. The upper and lower arms 22 and 23 have respective back ends coupled to the respective rear holders 26a and are coupled to the transmission case 11 with use of the rear holders 26a and the rear-wheel support members 26. The cushion devices 24 have respective lower ends coupled to the respective rear axle cases 11a of the transmission case 11.

The first battery 14 is, as illustrated in Figs. 1 to 3, in the space under the driver's seat 5 and the passenger's seat 5a, which is next to the driver's seat 5. The first battery 14 is oriented to have a first dimension L1 in the width direction of the body and a second dimension L2 in the front-back direction of the body, the first dimension L1 being larger than the second dimension L2.

As illustrated in Figs. 1 to 3, the electric motor 12 is under the cargo box 8. The electric motor 12 is, as illustrated in Figs. 1, 3, and 4, backward of the first battery 14 relative to the body, forward of the transmission case 11 relative to the body, and between the rear wheels 2. The utility vehicle includes a first stay 27 extending from the transmission case 11 and a second stay 28 standing on a rear-wheel support member 26. As illustrated in Figs. 3 to 5, the electric motor 12 has a first end and a second end in the width direction of the body, the first and second ends being attached to the first and second stays 27 and 28, respectively. The electric motor 12 is held by the rear-wheel support members 26 with the first and second stays 27 and 28 and the transmission case 11 in-between.

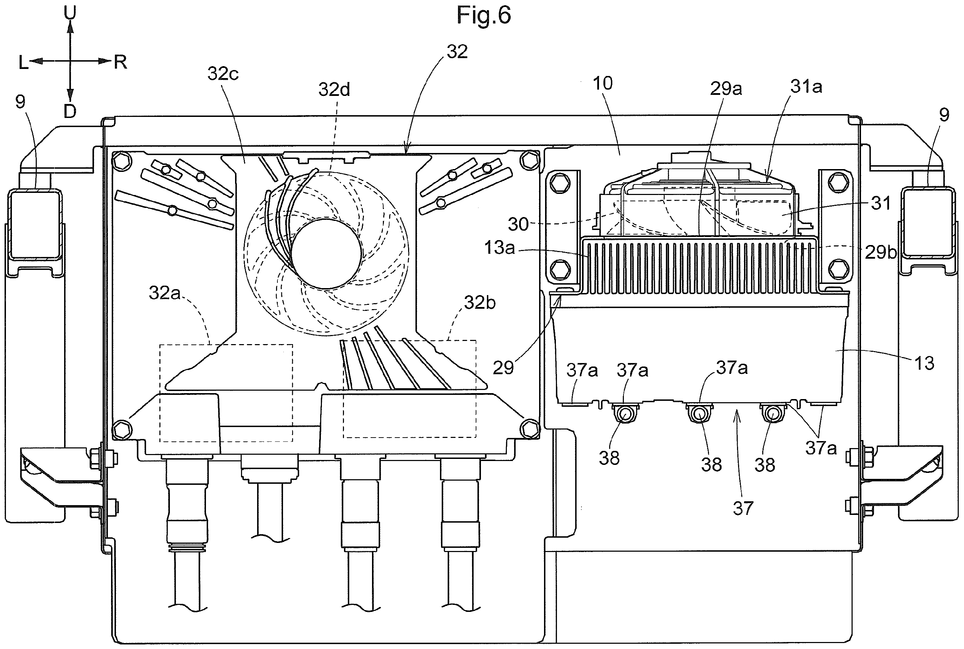

As illustrated in Figs. 1, 3, and 4, the inverter 13 is backward of the first battery 14 relative to the body, forward of the electric motor 12 relative to the body, and within the width of the first battery 14. The utility vehicle includes a partition plate 10 and an inverter holder 29 extending backward from the partition plate 10. The inverter 13 is, as illustrated in Fig. 6, attached to the inverter holder 29. The partition plate 10 is held by the body frame 9 and separates the driver space of the driver section 4 from the space under the cargo box 8. The inverter 13 is held by the body frame 9 with the inverter holder 29 and the partition plate 10 in-between.

As illustrated in Figs. 4 and 6, the utility vehicle includes a cooling fan 30 above the inverter 13. The inverter holder 29 includes a top plate 29a holding a fan case 31. The cooling fan 30 is rotatably held in the fan case 31. The cooling fan 30 is configured to draw air from outside the fan case 31 through an air intake opening 31a in the fan case 31 into the fan case 31 to generate cooling air and supply the cooling air through a through hole 29b in the top plate 29a to heat dissipating fins 13a at an upper portion of the inverter 13 to cool the heat dissipating fins 13a. The cooling fan 30 cools the heat dissipating fins 13a to cool the inverter 13.

As illustrated in Fig. 3, the utility vehicle includes an in-vehicle charger device 32 backward of the first battery 14 relative to the body, forward of the electric motor 12 relative to the body, and within the width of the first battery 14. The in-vehicle charger device 32 is, as illustrated in Figs. 3 and 6, next to the inverter 13 in the width direction of the body. The in-vehicle charger device 32 includes an in-vehicle charger 32a, a DC-to-DC converter 32b, and a charger case 32c containing the in-vehicle charger 32a and the DC-to-DC converter 32b. The charger case 32c includes a cooling fan 32d configured to blow cooling air to the in-vehicle charger 32a and the DC-to-DC converter 32b.

As illustrated in Fig. 3, the utility vehicle includes a charger port 33 opposite to the inverter 13 across the in-vehicle charger device 32 in the width direction of the body, forward of the rear wheels 2 relative to the body, and laterally outward of the in-vehicle charger device 32 relative to the body. The charger port 33 is, as illustrated in Fig. 1, held by a holder 34a included in a rear-wheel fender 3.

Connecting a charger cord from a power source outside the body such as a charger stand to the charger port 33 allows electric power to be supplied from the power source through the charger port 33 to the in-vehicle charger 32a, which then charges the first battery 14. The in-vehicle charger 32a also supplies the electric power to the DC-to-DC converter 32b for voltage adjustment. The DC-to-DC converter 32b then supplies the resulting electric power to a second battery 35 (described below).

As illustrated in Figs. 2 and 3, the utility vehicle includes a second battery 35 opposite to the in-vehicle charger device 32 across the inverter 13 in the width direction of the body, forward of the rear wheels 2 relative to the body, and laterally outward of the inverter 13. The second battery 35 is configured to output electric power for operation control or the like which electric power has a voltage lower than that of electric power that the first battery 14 outputs.

### Electric Motor and Inverter

As illustrated in Figs. 3 to 6, the electric motor 12 is provided with a terminal section 36 on an outer surface, whereas the inverter 13 is provided with an inverter terminal section 37 on an outer surface. The terminal section 36 includes a plurality of motor terminals 36a, whereas the inverter terminal section 37 includes a plurality of inverter terminals 37a. The motor terminals 36a are each connected to a predetermined one of the inverter terminals 37a with use of a harness 38, so that the electric motor 12 is connected to the inverter 13. The terminal section 36 for the present embodiment is an example including a terminal block on which the motor terminals 36a are arranged. The terminal section 36 may alternatively omit the terminal block.

The electric motor 12 is, as illustrated in Figs. 3 and 4, held by the rear-wheel support members 26 in such an orientation that the terminal section 36 is inclined on a portion of the outer surface which portion faces upward relative to the body.

Specifically, the electric motor 12 is rotated about the rotation axis 15a of the output pulley 15 as the output axis of the electric motor 12. In response to the electric motor 12 being rotated into such an orientation that the terminal section 36 (which is on a portion of the outer surface of the electric motor 12 which portion faces upward relative to the body) is inclined to have a lowered back portion, the electric motor 12 is attached to the first and second stays 27 and 28 in this orientation. This allows the electric motor 12 to be held by the rear-wheel support members 26 in such an orientation that the terminal section 36 (which is on a portion of the outer surface which portion faces upward relative to the body) is inclined to have a lowered back portion. The terminal section 36 is inclined to have a lowered back portion as viewed along the rotation axis 15a of the output pulley 15, which extends in the width direction of the body for the present embodiment. The terminal section 36 is inclined to have a lowered back portion for the present embodiment, but may alternatively be inclined to have a lowered front portion in accordance with the rotation direction of the electric motor 12.

As illustrated in Figs. 1 and 2, the electric motor 12 is under the cargo box 8. Swinging the cargo box 8 into the dumping orientation creates a large space available for maintenance work above the terminal section 36 to facilitate the work. The inclination of the terminal section 36 allows rain water or car washing water thereon to easily flow along and drop from the terminal section 36.

As illustrated in Figs. 4 and 6, the inverter 13 is attached to the inverter holder 29 and thereby held by the body frame 9 in such an orientation that the inverter terminal section 37 is on a portion of the outer surface which portion faces downward relative to the body. This prevents rain water or car washing water falling from above onto the inverter 13 from easily reaching and wetting the inverter terminal section 37.

### Alternative Embodiments

(1) The embodiment described above is an example in which the terminal section 36 of the electric motor 12 is inclined on a portion of the outer surface of the electric motor 12 which portion faces upward relative to the body. The terminal section is, however, disposed as such not necessarily on the electric motor 12 but alternatively on any of various other electric devices such as an inverter, a converter, and an in-vehicle charger.
(2) The embodiment described above is an example in which the terminal section 36 is inclined to have a lowered back portion. The terminal section 36 is, however, not necessarily inclined as such, and may alternatively be inclined to have a lowered front portion, a lowered left portion, or a lowered right portion.
(3) The embodiment described above is an example in which the respective rotation axes 15a and 16a of the output and input pulleys 15 and 16 extend in the width direction of the body. The rotation axes 15a and 16a may, however, alternatively extend in the front-back direction of the body.
(4) The embodiment described above is an example in which the cargo box 8 is movable into a dumping orientation. The cargo box 8 may, however, alternatively be unmovable into a dumping orientation.
(5) The embodiment described above is an example in which the inverter terminal section 37 of the inverter 13 is on a portion of the outer surface of the inverter 13 which portion faces downward relative to the body. The inverter terminal section 37 is, however, not necessarily on such a portion, and may alternatively be on any other portion of the outer surface such as a portion facing upward relative to the body, a portion facing backward relative to the body, or a portion facing forward relative to the body.

### Industrial Applicability

The present invention is applicable to any work vehicle including an electric motor configured to drive a travel device, such as utility vehicles and tractors.

### Reference Signs List

- 1: Front wheel (travel device)
- 2: Rear wheel (travel device)
- 8: Cargo box
- 11: Transmission case
- 12: Electric motor (electric device)
- 13: Inverter
- 15: Output pulley
- 16: Input pulley
- 17: Endless rotor
- 30: Cooling fan
- 36: Terminal section
- 37: Inverter terminal section

## Claims

1. A work vehicle, comprising:
a terminal section (36); and
an electric device (12) having an outer surface on which the terminal section (36) is disposed,
the terminal section (36) being inclined on a portion of the outer surface which portion faces upward relative to a body of the work vehicle.

2. The work vehicle according to claim 1, further comprising:
a cargo box (8) movable into a dumping orientation,
wherein the electric device (12) is below the cargo box (8).

3. The work vehicle according to claim 1 or 2, wherein
the electric device (12) is an electric motor (12).

4. The work vehicle according to claim 3, further comprising:
a travel device (1, 2);
a transmission case (11) configured to receive motive power from the electric motor (12) and output the motive power to the travel device (1, 2); and
an endless rotor (17) wound around an output pulley (15) of the electric motor (12) and an input pulley (16) of the transmission case (11) and configured to transmit motive power from the output pulley (15) to the input pulley (16),
wherein the terminal section (36) is inclined as viewed along a rotation axis of the output pulley (15).

5. The work vehicle according to claim 3 or 4, further comprising:
an inverter (13) connected to the electric motor (12),
wherein the inverter (13) has an outer surface provided with an inverter terminal section (37), and
the inverter terminal section (37) is on a portion of the outer surface of the inverter (13) which portion faces downward relative to the body.

6. The work vehicle according to claim 5, further comprising:
a cooling fan (30) disposed above the inverter (13) and configured to supply cooling air to the inverter (13).
